(19) Europäisches Patentamt
European Patent Office
Office européen des brevets

(11) Numéro de publication : **0 467 813 A1**

# (12) DEMANDE DE BREVET EUROPEEN

(21) Numéro de dépôt : **91420261.9**

(22) Date de dépôt : **16.07.91**

(51) Int. Cl.$^5$ : **B64C 27/82**

(30) Priorité : **19.07.90 FR 9009473**

(43) Date de publication de la demande :
**22.01.92 Bulletin 92/04**

(84) Etats contractants désignés :
**DE GB**

(71) Demandeur : **Chaneac, André**
**2 place de la Paix**
**F-07200 Aubenas (FR)**

(72) Inventeur : **Chaneac, André**
**2 place de la Paix**
**F-07200 Aubenas (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

(54) **Bloc moteur et sustentateur pour aéronef et nouveau type d'aéronef équipé d'un tel bloc.**

(57)   Bloc moteur et sustentateur (1) pour aéronef (2) comportant une voilure tournante (9) associée à des moyens permettant d'équilibrer le couple de rotation de ladite voilure.
   Les moyens d'équilibrage du couple de rotation sont constitués par une hélice soufflante (10), disposée horizontalement en dessous de la voilure (9), à l'intérieur d'une enceinte comprenant :
un conduit vertical (12,15) entourant l'hélice soufflante (10) et dont l'extrémité inférieure ouverte débouche sous le fuselage de l'aéronef (2) ;
un conduit horizontal (3) débouchant dans une zone intermédiaire du conduit vertical (12) et dont la sortie est dirigée vers l'arrière de l'appareil et ;
un ensemble obturateur réglable (11), disposé dans la zone de jonction des deux conduits précités (12,3) et qui permet de créer deux flux d'air, dont les débits sont réglables l'un par rapport à l'autre, l'un dirigé verticalement vers le bas, l'autre dirigé vers l'arrière de l'appareil.

FIG.1

EP 0 467 813 A1

La présente invention concerne un nouveau type de bloc moteur et sustentateur pour aéronef et plus particulièrement pour les engins à voilure tournante ; elle concerne également un nouveau type d'aéronef équipé d'un tel bloc.

Il est bien connu que dans les différents modèles d'aéronefs, tels qu'hélicoptères, autogyres, etc .., l'un des problèmes qui se posent est celui de l'équilibrage du couple crée par la voilure tournante afin de conserver une direction stable. L'une des solutions les plus répandues notamment dans le cas d'un hélicoptère, consiste à avoir recours à une hélice verticale placée à l'extrémité de la queue, cette hélice empêchant la rotation de l'appareil. Une telle solution efficace présente cependant comme inconvénient d'augmenter le poids, l'encombrement et de rendre le pilotage délicat.

La présente invention permet de remédier à ces inconvénients.

D'une manière générale, l'invention concerne donc un nouveau type de bloc moteur et sustentateur pour aéronefs comportant une voilure tournante associé à des moyens permettant d'équilibrer le couple de rotation de ladite voilure et elle se caractérise en ce que les moyens d'équilibrage du couple de rotation sont constitués par une hélice soufflante, disposée horizontalement en dessous de la voilure, à l'intérieur d'une enceinte comprenant :

- un conduit vertical entourant l'hélice soufflante et dont l'extrémité inférieure ouverte débouche sous le fuselage de l'aéronef ;

- un conduit horizontal débouchant dans une zone intermédiaire du conduit vertical et dont la sortie est dirigée vers l'arrière de l'appareil et ;

- un ensemble obturateur réglable, disposé dans la zone de jonction des deux conduits précités et qui permet de créer deux flux d'air, dont les débits sont réglables l'un par rapport à l'autre, l'un dirigé verticalement vers le bas, l'autre dirigé vers l'arrière de l'appareil.

Grâce à une telle conception, non seulement le couple de rotation de la voilure tournante est équilibrée pour le couple de rotation de l'hélice soufflante horizontale placée à l'entrée du conduit vertical, mais également, cette hélice tournant en sens inverse de la voilure, elle permet de comprimer de l'air ce qui, grâce à la structure de l'ensemble du bloc, favorise le décollage ainsi que le vol proprement dit.

D'une manière générale et en d'autres termes, on peut dire que l'hélice soufflante associée à la voilure est disposée à l'intérieur d'une enceinte creuse ayant sensiblement la forme d'un T, auquel on fait subir une rotation de 90° de façon à ce que la partie horizontale du T se retrouve verticale et que la partie verticale se retrouve horizontale, permettant ainsi d'obtenir un ensemble comportant trois branches, une horizontale et deux verticales en prolongement.

Selon une forme de réalisation conforme à l'invention :

– le bloc moteur et sustentateur comporte deux arbres moteurs verticaux concentriques, mais tournant en sens inverse, placés au centre du conduit vertical et à la partie supérieure du conduit, entraînant l'un le rotor de l'aéronef et l'autre l'hélice soufflante ; le moteur entraînant les arbres est disposé en dessous de l'hélice et à l'intérieur du conduit vertical ;

– l'ensemble obturateur réglable est constitué par un volet commandé, rotatif ou coulissant, permettant au pilote de faire varier la sortie de l'air comprimé par l'hélice soufflante, soit verticalement à la partie inférieure de l'aéronef, soit horizontalement à la partie arrière de l'appareil, soit les deux à la fois.

Par ailleurs, un tel bloc moteur et sustentateur permet d'obtenir un nouveau type d'aéronef qui se caractérise en ce que le bloc moteur et sustentateur est placé à l'intérieur d'un volume, désigné dans la suite de la description par le terme "fuselage", dont la coupe longitudinale est un profil d'aile épaisse, dont l'axe de poussée verticale est sensiblement situé sur l'axe des arbres moteurs verticaux concentriques, l'entrée verticale du bloc (ouverture supérieure du conduit vertical) étant placée sur l'extrados de l'aile et la sortie arrière sur une paroi verticale joignant l'extrados à l'intrados de l'aile.

L'invention et les avantages qu'elle apporte seront cependant mieux compris grâce à l'exemple de réalisation qui suit, donné à titre indicatif mais non limitatif, et qui est illustré par les schémas annexés dans lesquels :

– la figure 1 est une vue schématique en coupe longitudinale d'un aéronef équipé d'un bloc moteur et sustentateur conforme à l'invention ;

– la figure 2 est une vue schématique de dessus d'un tel aéronef ;

– la figure 3 est une vue schématique, partielle, en coupe longitudinale, montrant plus en détail la réalisation du bloc moteur et sustentateur conforme à l'invention et un mode de réalisation de l'ensemble à obturateur réglable que comporte un tel bloc ;

– la figure 4 est une vue schématique, en perspective, montrant plus en détail une forme de réalisation de la partie arrière d'un aéronef équipé d'un bloc moteur et sustentateur conforme à l'invention.

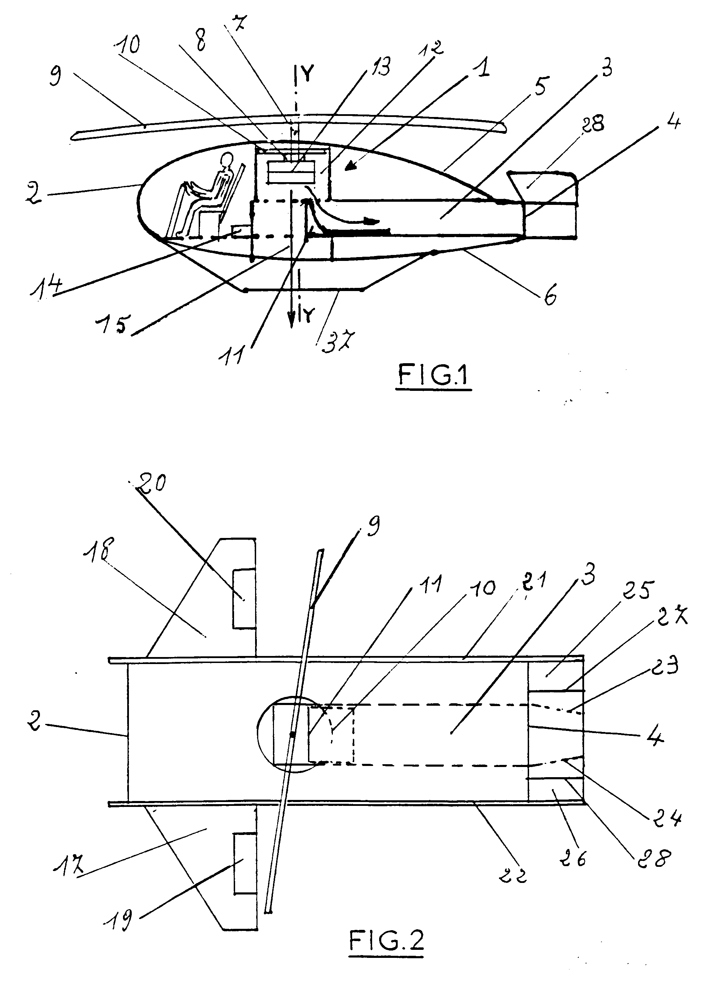

Si l'on se reporte aux figures 1 et 2 qui représentent respectivement comme dit précédemment, vu en coupe longitudinale et vu de dessus, un aéronef équipé d'un bloc moteur et sustentateur conforme à l'invention, ensemble désigné par la référence générale (1) et constitué essentiellement d'une enceinte creuse en forme de conduit en T ayant subi une rotation de 90°, de façon à ce que la partie horizontale du T se trouve verticale et forme deux conduits (12) et (15) et que la partie verticale se trouve horizontale et forme un conduit (3). Cet ensemble (1) est disposé à l'intérieur d'un "fuselage", désigné par la référence générale (2) ayant, dans la forme de réalisation illustrée, un profil d'aile épaisse comportant un extrados (5) et un intrados (6), reliés entre eux par une partie verticale arrière (4). A la partie supérieure du conduit vertical (12) est disposée, immédiatement en dessous de la voilure (9) (rotor de l'aéronef), une hélice soufflante (10). Le rotor (9) et l'hélice soufflante (10) sont entraînés au moyen d'un ou deux moteurs (13) et ce, par l'intermédiaire de deux arbres moteurs (7,8) concentriques et verticaux, placés au centre du conduit vertical (12) sensiblement selon l'axe de poussée de l'ensemble. L'arbre moteur (7) entraîne le rotor (9) de l'aéronef, le second arbre moteur (8) entraînant, quant à lui, l'hélice soufflante (10) qui est disposée au sommet du conduit vertical (12) immédiatement en dessous du rotor (9). Les deux arbres moteurs (7) et (8) tournent en sens inverse, ce qui permet d'équilibrer le couple de rotation de la voilure (rotor (9)). La face ouverte du conduit inférieur (15) débouche sous le fuselage de l'aéronef. Le conduit horizontal (3) a une extrémité qui débouche à l'intérieur du conduit vertical et une sortie ouverte, dirigée vers l'arrière de l'appareil mais qui débouche au niveau de la partie verticale arrière (4) joignant l'extrados (5) à l'intrados (6). Un ensemble obturateur réglable, désigné par la référence générale (11), comparable à un tiroir "coulissant" est disposé dans la zone de jonction entre le conduit horizontal (3) et le conduit vertical (12,15). Dans la forme de réalisation illustrée, cet ensemble obturateur est, comme dit précédemment en forme de tiroir et peut être déplacé à l'intérieur du conduit horizontal (3) de manière à pouvoir créer deux flux d'air, ayant des débits réglables l'un par rapport à l'autre, l'un des flux étant dirigé verticalement vers le bas, l'autre dirigé vers l'arrière de l'appareil, ces flux étant schématisés par les deux flèches de la figure 1. Un tel tiroir coulissant permet donc d'obturer en totalité ou en partie la sortie (15) du conduit vertical (12) et d'ouvrir ou fermer l'entrée du conduit horizontal (3) qui débouche à l'intérieur du conduit vertical (12), permettant ainsi au pilote de faire varier la sortie de l'air comprimé par l'hélice soufflante (10), soit verticalement à la partie inférieure de l'aéronef, soit horizontalement à la partie arrière de l'appareil, soit les deux à la fois. Une poutre (14) permet la fixation des ailes latérales (17) et (18) ainsi que du train d'attérissage (37) qui soutient l'aéronef lorsqu'il est en contact avec le sol.

Si l'on se reporte plus particulièrement aux figures 2 et 4, dans la forme de réalisation illustrée, la paroi verticale arrière (4) comporte des volets verticaux de direction (23) et (24) permettant de diriger horizontalement l'air comprimé par l'hélice soufflante (10) ainsi que des volets de profondeur (25) et (26) permettant de faire descendre ou monter l'aéronef ainsi que deux gouvernails de direction (27) et (28).

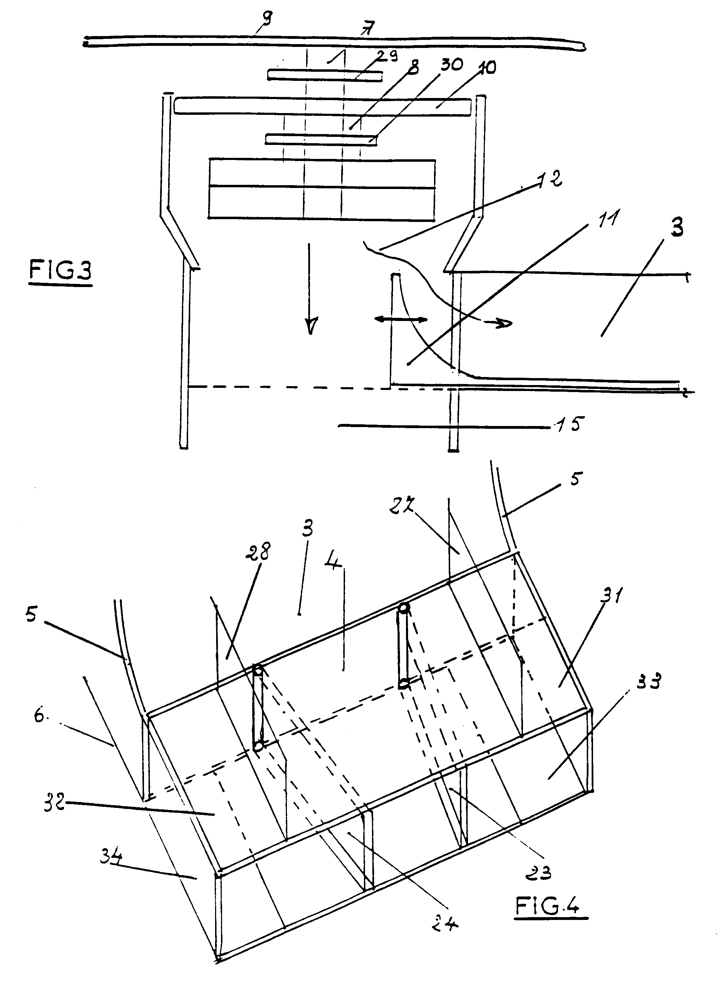

La figure 3 montre plus en détail la structure et le fonctionnement d'un tel bloc moteur et sustentateur. Ainsi que cela ressort de cette figure, les deux arbres moteurs (7) et (8) entraînent l'un le rotor (9) et l'autre l'hélice soufflante (10). Le tiroir coulissant (11) commandé par le pilote permet de faire passer de la broche (12) l'air comprimé par l'hélice soufflante (10) soit par la face ouverte (15) qui débouche sous l'appareil, soit par la branche horizontale arrière (3) qui débouche à l'arrière, soit aux deux à la fois. Des capteurs de couples (29) et (30) peuvent remplacer le pilote grâce à un système pneumatique électronique égalisant les deux couples crées par le rotor (9) et l'hélice soufflante (10) pour stabiliser la direction de l'aéronef.

La figure 4 montre, de manière schématique en perspective, l'agencement de la partie arrière d'un tel aéronef. Si l'on se reporte à cette figure, la paroi verticale arrière (4) joint l'extrados (5) à l'intrados (6) du fuselage en forme de profil d'ailes épaisses. Cette partie arrière comporte des gouvernes fixes stabilisatrices de direction (27) et (28), des volets de profondeur supérieure (31) et (32) et inférieure (33) et (34) disposés dans le profil de l'extrados (5) et de l'intrados (6). Les volets verticaux (23) et (24) permettent de diriger la sortie (3) du flux d'air comprimé par l'hélice soufflante (10) et donc de diriger l'aéronef.

Le fonctionnement d'un tel ensemble est le suivant. Le pilote agit sur le tiroir coulissant (11) de façon à ce que l'air comprimé à l'hélice soufflante (10) sorte par le conduit vertical (15) et ne passe pas par le conduit horizontal. Il met en route les moteurs (13) et équilibre constamment les couples du rotor (9) et de l'hélice soufflante (10) en faisant varier, soit les pas, soit les vitesses de rotation du rotor (9) et de l'hélice soufflante (10), puisque ces deux éléments tournent en sens inverse. L'aéronef peut décoller dès que la poussée du rotor (9) et de l'air pulsé à l'intérieur du conduit vertical est supérieure à la charge. A partir d'une hauteur raisonnable, le pilote commence à ouvrir le tiroir coulissant (1), ce qui permet la sortie par le conduit (3) d'une partie de l'air comprimé et provoque donc l'avance de l'appareil. Le pilote continue à ouvrir le tiroir (11) jusqu'à ce que le conduit (15) soit entièrement fermé, l'aéronef atteignant sensiblement la vitesse de sortie de l'air comprimé par l'hélice soufflante (10). Dès que l'aéronef a atteint une vitesse suffisante, la charge est équilibrée par la poussée due à la portance du fuselage en forme d'ailes épaisses (2) et des ailes (17) et (18). Le pilote peut arrêter l'arbre moteur (7) du rotor (9) ou peut annuler son pas, de façon à favoriser la vitesse d'avancement. Le pilote conduit grâce aux gouvernails de profondeur (19) et (20) des ailes (17) et (18) et (31,32, 33,34) de l'arrière (4). Le couple de rotation de l'hélice soufflante (10) est équilibré par la direction horizontale du jet d'air du conduit (3) grâce aux volets verticaux (23) et (24).

Pour terminer, le pilote lance l'arbre moteur (7) ou le pas du rotor (9), puis ferme le tiroir coulissant (11) de façon à supprimer la poussée d'avancement, puis diminue le régime de moteur pour atterrir en douceur.

Bien entendu, l'invention n'est pas limitée à l'exemple de réalisation décrit précédemment, mais elle en couvre toutes les variantes réalisées dans le même esprit.

Ainsi, si dans l'exemple décrit, les moyens permettant de régler et répartir les flux d'air engendrés par l'hélice soufflante seront constitués par un tiroir coulissant, il pourrait être envisagé d'utiliser tout moyen équivalent tel que par exemple un tiroir rotatif ou un système à volets mobiles. De même, le bloc moteur et sustentateur conforme à l'invention pourrait être mis en oeuvre sur tout autre type d'aéronef que celui décrit ayant une forme autre que celle en forme d'ailes épaisses. De plus, dans le cas d'un aéronef en forme d'aile épaisse, comme cela ressort de la figure 1, il peut être envisagé de faire dépasser le profil de ladite aile pour constituer le train fixe d'atterrissage (37) au contact du sol. Par ailleurs, la conception du bloc moteur et sustentateur conforme à l'invention, peut permettre de faire passer à l'intérieur de deux arbres moteurs concentriques un tube de vision pouvant constituer un périscope permettant de voir à l'arrière.

## Revendications

1/ Bloc moteur et sustentateur (1) pour aéronef (2) comportant une voilure tournante (9) associée à des moyens permettant d'équilibrer le couple de rotation de ladite voilure, caractérisé en ce que les moyens d'équilibrage du couple de rotation sont constitués par une hélice soufflante (10), disposée horizontalement en dessous de la voilure (9), à l'intérieur d'une enceinte comprenant :

    – un conduit vertical (12,15) entourant l'hélice soufflante (10) et dont l'extrémité inférieure ouverte débouche sous le fuselage de l'aéronef (2) ;

    – un conduit horizontal (3) débouchant dans une zone intermédiaire du conduit vertical (12) et dont la sortie est dirigée vers l'arrière de l'appareil et ;

    – un ensemble obturateur réglable (11), disposé dans la zone de jonction des deux conduits précités (12,3) et qui permet de créer deux flux d'air, dont les débits sont réglables l'un par rapport à l'autre, l'un dirigé verticalement vers le bas, l'autre dirigé vers l'arrière de l'appareil.

2/ Bloc moteur et sutentateur selon la revendication 1, caractérisé en ce que l'ensemble obturateur réglable (11) se présente sous la forme d'un tiroir coulissant placé à la jonction du conduit vertical et horizontal, permettant au pilote de faire varier la sortie de l'air comprimé par l'hélice soufflante (10) soit verticalement à la partie inférieure de l'aéronef, soit horizontalement à la partie arrière de l'appareil, soit les deux à la fois.

3/ Bloc moteur et sustentateur selon l'une des revendications et 2, caractérisé en ce qu'il comporte deux arbres moteurs concentriques (7,8), tournant en sens inverse, placés au centre du conduit vertical (12) et à la partie supérieure, l'un entraînant le rotor (9) de l'aéronef et l'autre l'hélice soufflante (10).

4/ Aéronef équipée d'un bloc moteur et sustentateur selon l'une des revendications 1 à 3, caractérisée en ce que son "fuselage" a la forme d'un volume dont la coupe longitudinale est un profil d'aile épaisse, dont l'axe de poussée vertical est sensiblement situé sur l'axe des arbres moteurs verticaux concentriques (7,8), l'entrée verticale du bloc étant placée sur l'extrados (5) de l'aile et la sortie arrière du conduit (3) sur une paroi verticale (4) joignant l'extrados (5) à l'intrados (6) de ladite aile.

5/ Aéronef selon la revendication 4, caractérisée en ce que les deux côtés latéraux du "fuselage" sont sensiblement verticaux et sont munis d'ailes (17,18) comportant chacune un gouvernail de profondeur (19,20).

6/ Aéronef selon l'une des revendications 4 et 5, caractérisé en ce que la paroi verticale arrière (4) joignant l'extrados (5) à l'intrados du fuselage, porte à la fois des volets de profondeur (25,26) de chaque côté, pivotant horizontalement dans le prolongement de l'intrados (5) et de l'extrados (6) et des volets de direction (23,24) pivotant verticalement, permettant de diriger la sortie de l'air pulsé par l'hélice soufflante (10), tous ces volets étant soit commandés par le pilote de l'aéronef, soit commandés automatiquement.

FIG.1

FIG.2

FIG 3

FIG.4

Office européen
des brevets

## RAPPORT DE RECHERCHE EUROPEENNE

Numero de la demande

EP    91 42 0261

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 532 273 (TECHNISCHE GERATE U. ENTWICKLUNGSGESELLSCHAFT) <br> * page 2, ligne 22 - page 3, ligne 6 * <br> * page 5, ligne 23 - page 6, ligne 15 * <br> * page 7, ligne 25 - page 7, ligne 31; figures 1-3,5,6 * <br> --- | 1,3 | B64C27/82 |
| A | GB-A-2 088 302 (COOK) <br> * page 1, ligne 3 - page 1, ligne 6 * <br> * page 1, ligne 41 - page 1, ligne 58 * <br> * page 1, ligne 67 - page 2, ligne 6; figures 1,2 * <br> --- | 2,6 | |
| A | US-A-3 260 482 (STROUKOFF) <br> * colonne 2, ligne 26 - colonne 2, ligne 46; figures 1,2,4 * <br> --- | 6 | |
| A | US-A-3 171 614 (HOLMES) <br> * colonne 1, ligne 44 - colonne 1, ligne 47 * <br> * colonne 1, ligne 50 - colonne 2, ligne 2 * <br> * colonne 2, ligne 8 - colonne 2, ligne 11; figures 1,2 * <br> ----- | 1 | |

**DOMAINES TECHNIQUES RECHERCHES (Int. Cl.5 )**

B64C
B60V

Le présent rapport a été établi pour toutes les revendications

| Lieu de la recherche | Date d'achèvement de la recherche | Examinateur |
|---|---|---|
| LA HAYE | 08 OCTOBRE 1991 | ZERI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P0402)